# EUROPÄISCHE PATENTSCHRIFT

(11) **EP 0 325 152 B1**
(45) Veröffentlichungstag und Bekanntmachung des Hinweises auf die Patenterteilung: **08.06.1994**
(21) Anmeldenummer: 89100378.2
(22) Anmeldetag: 11.01.1989
(51) Int. Cl.: G02B 6/34, G02B 6/28

(54) **Wellenlängenmultiplexer oder -demultiplexer**
Wavelength division multiplexer or demultiplexer
Multiplexeur ou démultiplexeur de longueur d'onde

(30) Priorität: 22.01.1988 DE 3801764
(43) Veröffentlichungstag der Anmeldung: 26.07.1989
(73) Patentinhaber: ANT Nachrichtentechnik GmbH, D-71522 Backnang (DE)
(72) Erfinder: Kuke, Albrecht, Dr.-Ing., D-7159 Auenwald (DE)

(56) Entgegenhaltungen:
- EP-A- 0 171 615
- FR-A- 2 500 642
- PATENT ABSTRACTS OF JAPAN, Band 6, Nr. 144 (E-122)[1022], 3. August 1982 ; & JP-A-57 68 098 (MITSUBISHI) 26-04-1982
- PROCEEDINGS OF THE IEEE, Band 70, Nr. 5, Mai 1982, Seiten 420-457, IEEE, NY, US; K.E. PETERSEN: "Silicon as a mechanical material"
- IEEE TRANSACTIONS ON ELECTRON DEVICES, Band ED-25, Nr. 10, Oktober 1978, Seiten 1185-1193, IEEE, NY, US; K.E. BEAN: "Anisotropic etching of silicon"

## Beschreibung

Die vorliegende Erfindung betrifft einen Wellenlängenmultiplexer oder -demultiplexer nach dem Oberbegriff des Patentanspruchs 1.

Wellenlängenmultiplexer und -demultiplexer werden in der optischen Nachrichtenübertragungstechnik eingesetzt. Sie dienen dazu, Strahlung unterschiedlicher Wellenlänge zusammenzuführen oder zu trennen. Wenn man optimale Übertragungseigenschaften erreichen will, so ist es notwendig, die Lichtwellenleiter und die optischen Komponenten genau einzujustieren und zu fixieren.

Aus der DE-OS 35 09 132 ist es bekannt, die Lichtwellenleiter in einer Lochplatte aus einem photolithographischen ätzbaren Material zu fixieren. Die Anschlußflächen der Lichtwellenleiter werden gemeinsam mit der Oberfläche der Lochplatte bearbeitet und poliert. Die in der Lochplatte fixierten Lichtwellenleiter werden dann als Ganzes justiert. Man erspart sich also einen Teil des Justieraufwandes.

Aus der EP 0 219 358 sind V-förmige, durch anisotropes Ätzen hergestellte Nuten in einkristallinem Silizium zur Halterung von Lichtwellenleitern bekannt.

Aus der DE-OS 32 06 600 geht ein Wellenlängenmultiplexer oder -demultiplexer hervor, bei dem die Lichtwellenleiter in geätzten V-förmigen Keilnuten liegen. Auch die Linsen des Gradiententyps liegen in Nuten mit schrägen Seitenwänden. Die Fixierungsstruktur ist auf einer Grundplatte aus einem Silizium-Einkristall ausgebildet, wobei die Oberfläche der Grundplatte mit einer (100)-Ebene des Silizium-Einkristalls korrespondiert. Die Fixierungsstruktur ist durch anisotropes Ätzen herstellbar.

Aus der FR-A-2 500 642 ist ein weiterer Wellenlängenmultiplexer bekannt, bei dem die mikrooptischen Strukturen auf einem Silizium-Einkristall aufgebaut werden, dessen Oberfläche der (100)-Ebene entspricht. Durch anisotropes Ätzen werden V-förmige Vertiefungen und U-förmige Aussparungen mit schrägen Seitenwänden und ebenem Boden für die Fixierung der Komponenten erzeugt.

In dem Artikel " Silicon as a Mechanical Material" , der Fachzeitschrift Proceedings of the IEEE, Vol. 70, No. 5, May 1982 werden Bearbeitungsverfahren für Silizium-Einkristalle und damit erreichte Anwendungen beschrieben. Offenbart wird hierin die Herstellung von V-förmigen Nuten bei (100)-Oberflächen und von Vertiefungen mit senkrechten Wänden und ebenem Boden bei (11̅0)-Oberflächen mit Hilfe von anisotropen Ätzverfahren.

Der Erfindung liegt die Aufgabe zugrunde, einen Wellenlängenmultiplexer oder -demultiplexer vorzuschlagen, bei dem auch beim Einsatz von mikrooptischen Komponenten unterschiedlicher Geometrie der hohen Justieraufwand entfällt und der Fixieraufwand reduziert wird.

Die Aufgabe wird bezüglich des Wellenlängenmultiplexers oder - demultiplexers durch die Merkmale des Patentanspruches 1 gelöst.

Eine vorteilhafte Weiterbildung des Wellenlängenmultiplexers oder -demultiplexers ist im Unteranspruch 2 angegeben.

Die Erfindung geht davon aus, daß die Reproduzierbarkeit von kristallografischen Winkeln und Ebenen aus physikalischen Gründen sehr hoch ist. Auch die aus der Halbleitertechnik bekannte Maskentechnik ist hochpräzise. Die Genauigkeit von Kristallstrukturen läßt sich beim anisotropen Ätzen ausnutzen. Der Grundgedanke der Erfinder ist es, diese Eigenschaften zu nutzen, um Ausnehmungen zur Halterung der mikrooptischen Komponenten und Lichtwellenleiter in Wellenlängenmultiplexer und -demultiplexer herzustellen.

In der DE-OS 32 06 600 werden die oben beschriebenen Eigenschaften ebenfalls ausgenutzt. Wenn man die Oberfläche des Silizium-Kristalls so wählt, daS sie mit einer (100)-Ebene korrespondiert, so können durch anisotropes Ätzen nur V-förmige Nuten und Nuten mit einem sich nach außen hin verbreiternden U-förmigen Querschnitt herstellt werden. Auch die Endflächen der Nuten sind geneigt, entsprechend {111}-Ebenen (siehe Figur 14 B), wenn die Projektion der Nuten auf die Oberfläche als Rechteck erscheint. Senkrechte Endflächen sind auch bei anderen Geometrien der Projektion nicht möglich, wenn wie in der DE-OS 32 06 600 die Oberfläche des Kristalls mit einer (100)-Ebene korrespondiert. In solchen Nuten ist es schwierig, Kugellinsen oder quaderförmige Filter zu halten.

Bei Wellenlängenmultiplexern oder -demultiplexern nach der vorliegenden Erfindung können auch Spiegel, Kugellinsen und Filter in Führungsnuten ohne weitere Hilfsmittel präzise fixiert werden, denn Führungsnuten mit senkrechten Seitenwänden sind ebenfalls herstellbar. Dies wird dadurch erreicht, daS die (11̅0)-Ebene des Silizium-Kristalls mit der Oberfläche der Siliziumplatte zusammenfällt.

Die {111}-Ebenen sind beim anisotropen Ätzen dadurch ausgezeichnet, daß die Ätzrate senkrecht zu ihnen sehr gering ist. Sie schneiden die (11̅0)-Ebene entweder senkrecht oder unter einem Winkel. Deshalb lassen sich in der Oberfläche eines Silizium-Einkristalls, die mit der (11̅0)-Ebene korrespondiert, sowohl Nuten, die auf der Oberfläche der Siliziumplatte parallelogrammförmig erscheinen, mit senkrechten Seitenwänden, als auch Aussparungen, die auf der Oberfläche parallelogramm - oder trapezförmig erscheinen, mit senkrechten und geneigten Seitenwänden herstellen.

Neben Silizium können auch andere Materialien eingesetzt werden, die anisotrop ätzbar sind. Diese Materialien müssen außerdem eine Vorzugsebene aufweisen, von der aus Ausnehmungen mit senkrechten und geneigten Seitenwänden anisotrop ätzbar sind.

Bei dem erfindungsgemäßen Wellenlängenmultiplexer oder -demultiplexer sind die Lichtwellenleiter und mikrooptischen Komponenten auf einer Platte aus einkristallinem Material befestigt. Die Anordnung der Lichtwellenleiter und mikrooptischen Komponenten ist so gewählt, daß bei Anwendung eines anisotropen Ätzverfahrens die hochpräzisen kristallographischen Flächen genutzt werden. Die Seitenwände der Ausnehmungen fallen mit kristallographischen Ebenen zusammen. Diese Ebenen sind dadurch ausgezeichnet, daß die Ätzrate senkrecht zu ihnen sehr gering ist im Vergleich zu Ätzraten in anderen kristallographischen Richtungen. Die geometrische Anordnung der mikrooptischen Komponenten ist dadurch beschränkt, daß durch anisotropisches Ätzen nur bestimmte Winkel herstellbar sind.

Zur Herstellung eines Wellenlängenmultiplexers oder -demultiplexers nach der vorliegenden Erfindung wird nach einem Plan für die Strahlführung und die Ausnehmungen, der die Lage der kristallographischen Ebenen und Winkel berücksichtigt, eine Maske hergestellt. Eine beschichtete Platte aus einkristallinem Material wird mit der Maske belichtet. Anschließend werden die Ausnehmungen anisotrop geätzt. Die Lichtwellenleiter und die mikrooptischen Komponenten werden in die Ausnehmungen eingelegt und befestigt. Die Befestigung kann beispielsweise mit Kitt erfolgen.

Anhand der Zeichnungen wird ein Ausführungsbeispiel der Erfindung erläutert.
Figur 1: Aufsicht auf eine Siliziumplatte mit Lichtwellenleitern, mikrooptischen Komponenten und Ausnehmungen zur Halterung der Lichtwellenleiter und mikrooptischen Komponenten,
Figur 2: Darstellung einer (11̅0)-Ebene eines Silizium-Kristalls mit kristallographischen Vektoren und Winkeln.

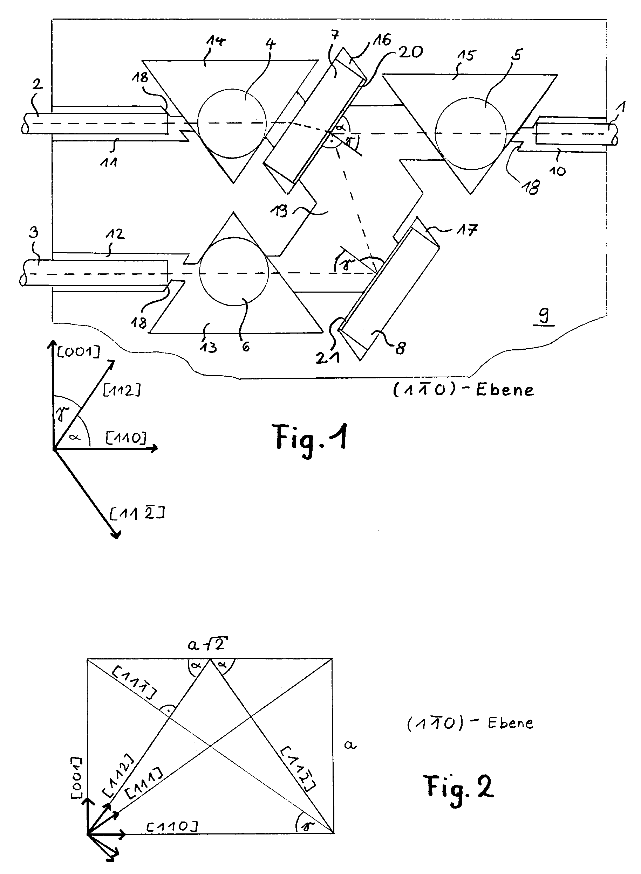

Figur 1 stellt anhand eines Duplexers eine mögliche Anordnung von Lichtwellenleitern 1 bis 3 und mikrooptischen Komponenten 4 bis 8 dar. Das Ausführungsbeispiel läßt sich leicht auf einen Multiplexer mit n Lichtwellenleitern erweitern. Als kristallines Material wird Silizium verwendet.

Ein Siliziumwafer ist so geschnitten, daß die Oberfläche der Platte 9 mit einer (11̅0)-Ebene des Silizium-Kristalls zusammenfällt (Bezeichnung der Ebenen und Vektoren mit den Millerschen Indizes).

In Figur 2 ist eine (11̅0)-Ebene dargestellt. Vier Ebenen, die sich dadurch auszeichnen, daß die Ätzrate in Richtung der Flächennormalen wesentlich geringer als die Ätzrate in anderen kristallographischen Richtungen ist, schneiden die (11̅0)-Ebene. Die Spuren, das heißt die Schnittlinien der vier Ebenen mit der (11̅0)-Ebene, sind in Figur 2 eingezeichnet. Die (111̅)-Ebene und die (111)-Ebene schneiden die (11̅0)-Ebene in [112] - bzw. [112̅]-Richtung und stehen senkrecht auf der (11̅0)-Ebene. Die Spuren der (1̅11̅)-Ebene und der (11̅1̅)-Ebene fallen zusammen und verlaufen in [110]-Richtung. Diese Ebenen bilden einen Winkel von 70,53° zueinander und einen Winkel von 35,26° zur (11̅0)-Ebene, also zur Substratoberfläche.

Zur Halterung der drei kreiszylinderförmigen Lichtwellenleiter 1, 2, 3 sind V-förmige Nuten 10, 11, 12 vorgesehen, die in [110]-Richtung verlaufen. Durch die Breite dieser Nuten 10 11, 12 ist auch die Tiefe bestimmt, so daß durch die hochgenaue Maskentechnik die laterale Position der Lichtwellenleiter festgelegt wird. Die axiale Positionierung der Lichtwellenleiter ist durch Anschläge 18 festgelegt. Die aus den Stirnflächen der drei Lichtwellenleiter 1, 2, 3 aus- bzw. eintretenden Strahlen werden durch drei Kugellinsen 4, 5, 6 kollimiert. Der Abstand zwischen Lichtwellenleitern 1, 2,3 und Kugellinsen 4, 5, 6 ist durch die Anschläge 18 festgelegt. Die Anschläge 18 verlaufen parallel zur [112] - bzw. [112̅]-Richtung und haben daher senkrechte Wände. Für die Kugellinsen 4, 5, 6 werden Aussparungen 13, 14, 15 geätzt, die auf der Siliziumplattenoberfläche dreieckig sind und zwei senkrechte, also zur [112]- und [112̅]-Richtung parallele Seitenwände und zwei geneigte Seitenwände haben. Die Aussparungen 13, 14, 15, entsprechen pyramidenförmigen Körpern mit trapezförmiger Grundfläche und dreieckigen Seitenflächen, deren eine Seitenfläche mit der Substratoberfläche zusammenfällt. Es ist auch möglich die Aussparungen so zu ätzen, daß sie auf der Siliziumplattenoberfläche parallelogrammförmig oder trapezförmig erscheinen. Dies erweist sich beispielsweise dann als besonders vorteilhaft, wenn man eine hohe Packungsdichte der optischen Elemente erreichen will. Durch die Halterungen wird gewährleistet, daß die Kugellinsen 4, 5, 6 eine feste Lage haben. Neben diesen Halterungen sind zwei Nuten 16, 17 mit senkrechten Seitenwänden in [112]- und [112̅]-Richtung vorgesehen, die auf der Siliziumplattenoberfläche parallelogrammförmig erscheinen. Diese Nuten 16, 17 dienen zur Halterung für ein Filter 7 und einen Spiegel 8. Zwischen den mikrooptischen Komponenten sind beliebige Vertiefungen angebracht, so daß die Lichtstrahlen nicht behindert werden.

Die Anordnung der Lichtwellenleiter 1, 2, 3 und mikrooptischen Komponenten 4 bis 8 sieht wie folgt aus. Die Lichtwellenleiter 1, 2, 3 sind parallel zueinander mit gegenseitigem Abstand angeordnet, Eingangs- und Ausgangswellenleiter an einander gegenüberliegenden Seiten der Platte 9. An der Stirnfläche der Lichtwellenleiter 1, 2, 3 befindet sich je eine Kugellinse 4, 5, 6, die die aus oder eintretenden Strahlen kollimiert.

Verfolgt man den Strahlengang des Demultiplexers, so verlassen Strahlen der Wellenlängen λ₁ und λ₂ den Lichtwellenleiter 1, werden von der Kugellinse 5 kollimiert, treffen dann mit dem Einfallswinkel γ, der gleich dem Winkel zwischen der [001] - und der [112] -Richtung ist, auf eine Filterschicht 20 auf den Filter 7. Dabei wird Strahlung der Wellenlänge λ₁ reflektiert und Strahlung der Wellenlänge λ₂ durchgelassen. Der durchgelassene Strahl wird beim Austritt aus dem Filter nochmals gebrochen, trifft dann auf die Kugellinse 4 und wird dort auf den Lichtwellenleiter 2 fokussiert. Der reflektierte Strahl trifft auf eine Spiegelschicht 21 eines Spiegels 8. Der Einfallswinkel entspricht dem Winkel zwischen der [001] - und der [112] -Richtung. Der reflektierte Strahl wird dann von der Kugellinse 6 auf den Lichtwellenleiter 3 fokussiert. Durch Umkehrung des optischen Strahlenganges erhält man einen Wellenlängenmultiplexer.
Die Struktur läßt sich erweitern, wenn an Stelle des Spiegels weitere wellenlängenselektive Filter verwendet werden.

## Patentansprüche

1. Wellenlängenmultiplexer oder -demultiplexer, bestehend aus einer Anordnung von mindestens einem Eingangslichtwellenleiter, mindestens einem Ausgangslichtwellenleiter und mikrooptischen Komponenten, mit den folgenden Merkmalen:
a) Die Lichtwellenleiter (1, 2, 3 ) und die mikrooptischen Komponenten (4 bis 8) sind auf einer Siliziumplatte (9) aus einkristallinem Silizium fixiert, wobei Halterungen für die Lichtwellenleiter und mikrooptischen Komponenten durch anisotropes Ätzen hergestellt sind;
b) die Oberfläche der Siliziumplatte (9) fällt mit einer (11̅0) Ebene des Silizium-Kristalls zusammen;
c) zur Halterung der Lichtwellenleiter (1, 2, 3) weist die Siliziumplatte (9) V-förmige Nuten (10, 11, 12) auf;
d) zur Halterung von mikrooptischen Komponenten weist die Siliziumplatte (9) Nuten (16, 17) oder Aussparungen(13, 14, 15) auf, wobei die Nuten (16, 17) auf Oberflächen der Siliziumplatten parallelogrammförmig erscheinen und senkrechte Seitenwände haben und die Aussparungen (13, 14, 15) auf der Oberfläche der Siliziumplatte (9) parallelogramm- oder trapezförmig erscheinen und senkrechte und geneigte Seitenwände haben.

2. Wellenlängenmultiplexer oder -demultiplexer nach Anspruch 1, gekennzeichnet durch die folgenden Merkmale:
a) Für jeden Lichtwellenleiter (1, 2, 3) ist mit Abstand zu dessen Stirnfläche ein Kollimator (4, 5, 6) vorgesehen;
b) die Eingangs- und Ausgangslichtwellenleiter (1, 2, 3) sind an einander gegenüberliegenden Seiten der Siliziumplatte parallel zueinander angeordnet;
c) die Seitenwände der V-förmigen Nuten (10, 11, 12) werden von (1̅11̅) und (11̅1)-Ebenen gebildet;
d) die Seitenwände der Nuten (16, 17), die auf der Oberfläche der Siliziumplatte parallelogrammförmig erscheinen und senkrechte Seitenwände haben, werden von (111)- und (111̅)-Ebenen gebildet;
e) zur Wellenlängentrennung sind Filter (7) vorgesehen.

## Claims

1. Wavelength multiplexer or demultiplexer consisting of an arrangement of at least one entry optical conductor, at least one exit optical conductor and micro-optical components, with the following features:
a) the optical conductors (1, 2, 3) and the micro-optical components (4 to 8) are fixed on a silicon wafer (9) of monocrystalline silicon, wherein retainers for the optical conductors and micro-optical components are produced through anisotropic etching;
b) the surface of the silicon wafer (9) coincides with one (11̅0) plane of the silicon crystal;
c) the silicon wafer (9) has V-shaped grooves (10, 11, 12) for retention of the optical conductors (1, 2, 3);
d) the silicon wafer (9) has grooves (16, 17) or recesses (13, 14, 15) for retention of the micro-optical components, wherein the grooves (16, 17) appear parallelogram-shaped on the surfaces of the silicon wafers and have vertical side walls and the recesses (13, 14, 15) upper parallelogram-shaped or trapezium-shaped on the surface of the silicon wafer (9) and have vertical and inclined side walls.

2. Wavelength multiplexer or demultiplexer according to claim 1, characterised by the following features:
a) a collimator (4, 5, 6) is provided for each optical conductor (1, 2, 3) at a spacing from the end faces thereof;
b) the entry and exit optical conductors (1, 2, 3) are arranged parallel to one another at opposite sides of the silicon plate;
c) the side walls of the V-shaped grooves (10, 11, 12) are formed by (1̅11̅) and (11̅1) planes;
d) the side walls of the grooves (16, 17), which appear parallelogram-shaped on the surface of the silicon wafer and have vertical side walls, are formed by (111) and (111̅) planes;
e) filters (7) are provided for wavelength separation.

## Revendications

1. Multiplexeur de longueur d'onde ou démultiplexeur de longueur d'onde consistant en un agencement d'au moins un guide d'ondes lumineuses d'entrée, d'au moins un guides d'ondes lumineuses de sortie et de composants micro-optiques, avec les caractéristiques suivantes :
a) les guides d'ondes lumineuses (1, 2, 3) et les composants micro-optiques (4 à 8) sont fixés sur une plaque de silicium (9) de silicium monocristallin, où des éléments de maintien pour les guides d'ondes lumineuses et les composants micro-optiques sont réalisés par attaque anisotrope ;
b) la surface de la plaque de silicium (9) coïncide avec un plan (11̅0) du cristal de silicium ;
c) pour le maintien des guides d'ondes lumineuses (1, 2, 3) la plaque de silicium (9) présente des rainures en forme de V (10, 11, 12) ;
d) pour le maintien de composants micro-optiques la plaque de silicium (9) présente des rainures (16, 17) ou des évidements (13, 14, 15), où les rainures (16, 17), sur des surfaces des plaques de silicium, apparaissent en forme de parallélogrammes et ont des parois latérales perpendiculaires, et les évidements (13, 14, 15), sur la surface de la plaque de silicium (9), apparaissent en forme de parallolégrammes ou en forme de trapèzes et ont des parois latérales perpendiculaires et en biais.

2. Multiplexeur de longueur d'onde ou démultiplexeur de longueur d'onde selon la revendication 1, caractérisé par les caractéristiques suivantes :
a) pour chaque guides d'ondes lumineuses (1, 2, 3) un collimateur (4, 5, 6) espacé de la face frontale de celui-ci est prévu ;
b) les guides d'ondes lumineuses d'entrée et de sortie (1, 2, 3) sont agencés à des côtés de la plaque de silicium se trouvant à l'opposé l'un de l'autre, parallèlement l'un à l'autre ;
c) les parois latérales des rainures en forme de V (10, 11, 12) sont formées par des plans (1̅11̅) et (11̅1) ;
d) les parois latérales des rainures (16, 17), qui apparaissent en forme de parallélogrammes sur la surface de la plaque de silicium et ont des parois latérales perpendiculaires, sont formées par des plans (111) et (111̅) ;
e) pour la séparation de longueurs d'onde des filtres (7) sont prévus.
